(19) Europäisches Patentamt
European Patent Office
Office européen des brevets

(11) Publication number: **0 039 588**
**B1**

(12) # EUROPEAN PATENT SPECIFICATION

(45) Date of publication of patent specification: **15.08.84**

(51) Int. Cl.³: **C 08 F 299/06**, C 08 G 18/67, B 29 C 6/02, C 09 D 3/72

(21) Application number: **81301922.1**

(22) Date of filing: **01.05.81**

(54) **In-mold coating compositions and a method for making coated molded articles.**

(30) Priority: **01.05.80 US 145800**

(43) Date of publication of application: **11.11.81 *Bulletin* 81/45**

(45) Publication of the grant of the patent: **15.08.84 Bulletin 84/33**

(84) Designated Contracting States: **DE FR GB**

(56) References cited:
**EP - A - 0 006 308**
**FR - A - 2 095 629**
**FR - A - 2 271 807**
**FR - A - 2 391 705**
**GB - A - 986 566**
**US - A - 4 081 578**
**US - A - 4 189 517**

(73) Proprietor: **Freeman Chemical Corporation**
**222 East Main Street**
**Port Washington Wisconsin 53074 (US)**

(72) Inventor: **Prom, James R.**
**3200 North Highway O.**
**Saukville Wisconsin (US)**
Inventor: **Navin, Robert F.**
**679 North Holden Street**
**Port Washington Wisconsin (US)**

(74) Representative: **Lyons, Andrew John et al,**
**ROYSTONS 531 Tower Building Water Street**
**Liverpool L3 1BA (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 039 588 B1

## Description

This invention concerns in-mold coating compositions and a method of producing thermoset fiber-reinforced molded articles having in-mold applied coatings.

Fiber-reinforced, thermosetting resinous products are produced in elevated temperature, matched metal molds. One of the shortcomings of this process is that the molded article surface tend to be irregular and tends to have surface exposure of the reinforcing fibers, usually glass fibers.

The in-mold coating technique has been developed to improve the quality of the surface of a molded article after the curing of the article in a matched metal mold has been substantially advanced, see U.S. patent 4,081,578. In the matched metal molding process, two or more shaped mold elements cooperate to define a mold cavity. A molding composition (polymerizable thermosetting resin and fibrous reinforcing material and usually fillers, catalysts, mold release agents, and other reagents) is introduced into a mold cavity between the matched metal mold surfaces. The shaped mold elements are brought together to spread the molding composition throughout the mold cavity and to confine the molding composition until curing is essentially completed. The heated mold elements initiate polymerization. When the polymerization is well advanced, i.e., the article has assumed the shape of the mold cavity, the mold surfaces are separated slightly, usually a distance from $7.62\times10^{-5}$ to $101.6\times10^{-5}$ m, and a liquid, in-mold, coating composition is injected under pressure into the mold cavity. Thereafter the mold elements are again brought together under pressure which causes the liquid coating composition to disperse over the surface of the partially cured article and to conform with the surface of the contiguous mold element. After a suitable time, the polymerization of the article is essentially completed and the polymerization of the coating composition is essentially completed. At that time the mold elements are separated and the coated, molded article is removed.

Two-component in-mold coating compositions are known, for example from U.S. patent 4,081,578, which employ polyisocyanates as one ingredient and hydroxy-terminated high molecular weight unsaturated polyester resin as another ingredient. These compositions have limited pot life after being mixed and must be used promptly. These compositions have exhibited some inadequate adhesive properties.

There is a demonstrated need for a single-component coating composition which can be prepared and retained for extended periods of time by the molding operator.

According to the present invention, an in-mold coating composition is provided for thermoset fiber-reinforced plastic molded articles. The composition includes a polyurethane polyacrylate or polymethacrylate and copolymerizable ethylenically unsaturated monomer along with a polymerization initiator and fillers which may include inert particulate fillers, pigments, mold release agents. The polyurethane polyacrylate or polymethacrylate is a reaction product, substantially free of unreacted—NCO radicals of

1. an organic diisocyanate;
2. a hydroxy alkyl acrylate or methacrylate;
3. an organic diol not containing arylene groups.

The polyurethane polyacrylate or polymethacrylate preferably constitutes from 0.075 to 5.0 parts by weight for each part by weight of the ethylenically unsaturated copolymerizable monomer.

The polyurethane polyacrylate or polymethacrylate may be an oligomer which can be prepared by combining an organic diisocyanate, a hydroxy alkyl acrylate or methacrylate and an organic diol.

A preferred organic diisocyanate is toluene diisocyanate (TDI). The readily available mixture of the 2,4- and 2,6-isomers of TDI is useful. Other organic diisocyanates include isophorone diisocyanate, polymethylene polyphenyl diisocyanate. In general a mixture of polyisocyanates and monoisocyanates having an —NCO equivalent of 1.8 to 2.2 is useful and can be categorized as a diisocyanate for the present purposes.

In general these materials include hydroxy ethyl acrylate or methacrylate, hydroxy propyl acrylate or methacrylate, hydroxy butyl acrylate or methacrylate, a hydroxyl group preferably being attached to the beta carbon of the alkyl radical. The alkyl radical may contain up to 8 carbon atoms.

The following structural formula describes useful hydroxy alkyl acrylates and methacrylates:

$$CH_2{=}\underset{\underset{R}{|}}{C}-\overset{\overset{O}{\|}}{C}O-(C_nH_{2n})OH$$

wherein

R=—H or —$CH_3$; and
n=an integer from 2 to 8.

An organic diol not containing arylene groups is employed as the core of the oligomer which comprises the polyurethane polyacrylate or methacrylate. The proportion of organic diol in the polyurethane polyacrylate influences the size of each oligomer. Useful organic diols are alkylene diols, alkylene diol esters and polyesters, alkylene diol ethers and polyethers such as ethylene glycol, propylene glycol, diethylene glycol, dipropylene glycol, polyethylene glycol, polypropylene glycol, hydroxy alkyl ethers of butane diol and the like, the diester reaction product of dicarboxylic acid or anhydride and an organic diol as already described, for example, a dihydroxy functional polyester of adipic acid and diethylene glycol. Alkylene oxide adducts of diester diols may be employed.

From 0.15 to 0.5 mols of the organic diol are supplied for each mol of the hydroxy alkyl acrylate or methacrylate. The organic diisocyanate is supplied such that the NCO/OH ration in the system is 0.9 to 1.0.

The polyurethane polyacrylate or methacrylate is formed by combining the organic diol, the organic diisocyanate and the hydroxy alkyl acrylate or methacrylate in the presence of a suitable catalyst for the reaction of —NCO radicals with hydroxyl radicals, for example, a tin catalyst. A preferred procedure is to combine the organic diisocyanate with the hydroxy alkyl acrylate or methacrylate to produce a urethane product having an acrylic or methacrylic radical and an unreacted —NCO radical. That monoisocyanate is then combined with the organic diol at about 80°C until substantially all of the —NCO radicals are reacted. The resulting oligomer is dissolved in a suitable ethylenically unsaturated copolymerizable monomer to reduce the viscosity of the mixture to a useful level. In general the polyurethane polyacrylate will comprise from 7 to 90 percent by weight of the resinous ingredients (of the coating composition) and the copolymerizable ethylenically unsaturated monomer will comprise from 93 to 10 percent of the resinous ingredients (of the coating composition). Thus the polyurethane polyacrylate constitutes from 0.075 to 5.0 parts by weight for each part by weight of the ethylenically unsaturated copolymerizable monomer.

Copolymerizable monomers include styrene, alpha methyl styrene, divinyl benzene, vinyl toluene, diallyl phthalate, acrylate or methacrylate esters such as ethyl acrylate, methyl acrylate, propyl acrylate, butyl acrylate, hexyl acrylate and the corresponding methacrylates; ethylene glycol diacrylate, ethylene glycol dimethacrylate, acrylic and methacrylic esters of diepoxides such as the acrylic or methacrylic diester of the diglycidyl ether of bisphenol-A.

The in-mold coating composition may contain inhibitors and stabilizers to retard premature polymerization of the composition in the manner well known in the molding composition arts. A catalyst for the reaction of —NCO radicals and —OH radicals also is included, preferably a tin catalyst such as dibutyl tin dilaurate or stannous octoate. Mold release agents such as zinc stearate are included in the composition. Inert particulate fillers and opacifiers may be added along with pigments if desired. An initiator for addition polymerization of the acrylates and copolymerizable monomers is included, e.g., organic peroxide initiators.

The molded articles customarily are fabricated from unsaturated polyester resin compositions which include

A. an unsaturated polyester resin usually formed by polyesterification of organic polyols and organic polycarboxylic acids, at least a portion of which includes ethylenically unsaturated polycarboxylic acid;

B. copolymerizable monomer for the unsaturated polyester resin, usually styrene;

C. fillers, including particulate inert fillers,

D. catalyst for the condensation polymerization of the unsaturated polyester resin with the copolymerizable monomer;

E. mold release agents;

F. glass fiber reinforcing materials.

The molding composition is introduced into a matched metal mold at temperatures usually in the range of 150°C. The mold is closed and the molding composition is allowed to polymerize and assume the shape of the interior of the mold.

After the molded article has at least partially polymerized and assumed the shape of the interior of the mold, the mold is opened and an in-mold coating composition is introduced. Thereafter the mold is closed once more causing the coating composition to spread over at least one surface of the molded article. The mold is retained in a closed position for a sufficient period to allow the molded article to complete further curing and to allow the coating composition to be cured as an adherent coating over at least one surface of the molded article. Thereafter the mold is opened and the thermoset glass fiber-reinforced plastic molded article is recovered having a cured, adherent coating of the present coating composition over at least one surface thereof.

The invention will now be further described by means of the following Examples.

Example 1

To prepare a polyurethane polyacrylate, the following ingredients were combined in a reactor:

1 mol toluene diisocyanate, a mixture of the 2,4- and 2,6-isomers;
1 mol hydroxy ethyl methacrylate;
1/2 mol of a difunctional polyester formed by reaction of adipic acid and diethylene glycol, said polyester having a low acid number and having a hydroxyl number from 200 to 210;
dibutyl tin dilaurate catalyst, 1/3 percent by weight of toluene diisocyanate;
500 p.p.m. a stabilizer;
200 p.p.m. an inhibitor.

Initially the toluene diisocyanate was combined with the hydroxy methyl methacrylate in the presence of the tin catalyst at about 65°C. Thereafter the polyester was

added slowly to the reaction kettle at about 80°C until substantially all of the —NCO radicals had been reacted. An in-mold coating composition was prepared from 70 parts by weight of the described polyurethane polyacrylate resin and 30 parts by weight styrene. This resinous mixture was combined with zinc stearate as a mold release agent, calcium carbinate filler, pigment pastes and t-butyl perbenzoate catalyst. The resulting mixture exhibited good shelf life in the absence of a catalyst and exhibited good catalyzed pot life after the catalyst was added.

An in-mold coated article was prepared in a mold comprising a 0.36 m×0.36 m flat sheet of glass fiber-reinforced polyester, $0.32\times10^{-2}$ m thick. The coating composition was introduced into the open mold in a sufficient quantity to provide a coating $7.62\times10^{-5}$ m thick. The mold was retained at 150°C for 2 minutes.

The resulting product had a coating exhibiting:

pencil hardness=H;
Gardner gloss=35 (60° angle);
adhesion—good;
color—uniform.

Example 2

A polyurethane polyacrylate was prepared by combining, as described in Example 1, the following ingredients:

1 mol toluene diisocyanate, a mixture of 2,4- and 2,6-isomers;
1 mol hydroxy ethyl acrylate;
0.5 mol polypropylene glycol, 1000 molecular weight.

70 parts by weight of the resulting polyurethane polyacrylate were mixed with 30 parts by weight styrene. The resulting styrene solution of polyurethane polyacrylate was combined with a dimethacrylate ester of the diglycidyl ether of bisphenol-A in a styrene solution. The resulting mixture contained 1 part by weight of the styrene solution and 1 part by weight of the dimethacrylate ester of the diglycidyl ether of bisphenol-A in 30 percent styrene. This resinous mixture was combined with catalysts and fillers and applied as a coating to the same 0.36 m×0.36 m molded article described in Example 1 at 150°C for 2 minutes. The resulting coated article had:

hardness—F;
a gloss of 42 (60° angle);
adhesion—excellent.

## Claims

1. An in-mold coating composition comprising

A. a polyurethane polyacrylate or polymethacrylate which is the reaction product, substantially free of unreacted —NCO radicals of

(1) an organic diisocyanate;
(2) a hydroxy alkyl acrylate or methacrylate;
(3) an organic diol not containing arylene groups, selected from alkyklene diols, alkylene diol esters and polyesters; alkylene diol ethers and polyethers;

B. copolymerizable alpha-, beta-ethylenically unsaturated monomer;
C. an initiator for addition polymerization;
D. fillers.

2. A composition as claimed in claim 1 wherein the molar ratio of said organic diol to said hydroxy alkyl acrylate or methacrylate is 0.15 to 0.5 and the amount of said organic diisocyanate is sufficient to develop a NCO/OH ratio of 0.9 to 1.0 in the composition.

3. A composition as claimed in claim 1 or 2 wherein the said organic diisocyanate is toluene diisocyanate.

4. A composition as claimed in claim 1, 2 or 3 wherein the said organic diol is dihydroxy functional polyester of adipic acid and diethylene glycol.

5. A composition as claimed in claim 1, 2 or 3 wherein the said organic diol is polypropylene glycol.

6. A composition as claimed in any one of claims 1 to 5 wherein 0.075 to 5.0 parts by weight of the said polyurethane polyacrylate are provided for each part by weight of the said ethylenically unsaturated copolymerizable monomer.

7. A method for producing a coated, molded, fiber-reinforced thermoset plastic article comprising

producing a fiber-reinforced, thermoset plastic article in a matched metal mold;
opening the said mold after the article has attained its intended shape;
introducing into the open mold a composition as claimed in any one of claims 1 to 6;
closing the mold and thereby spreading the said composition over at least one surface of the said article; retaining the mold in the closed condition at a molding temperature until the said article is further cured and the said composition is cured;
opening the mold and recovering a molded, fiber-reinforced thermoset plastic article having an adherent coating over at least one surface thereof.

8. A method as claimed in claim 7 wherein said fiber-reinforced thermoset plastics material is made from a composition comprising:

A. an unsaturated polyester resin
B. a copolymerizable monomer for the unsaturated polyester resin
C. fillers
D. a catalyst for the condensation polymerization of the unsaturated polyester resin with the copolymerizable monomer

E. a mold release agent; and

F. glass fiber reinforcing material.

**Patentansprüche**

1. Überzugsmasse zur Anwendung beim Formpressen, aus

(A) einem Polyurethanpolyacrylat oder -methacrylat, das das im wesentlichen von nichtlichen von nichtumgesetzten NCO-Resten freie Reaktionsprodukt ist aus

(1) einem organischen Diisocyanat,
(2) einem Hydroxyalkylacrylat oder -methacrylat,
(3) einem organischen Diol, das keine Arylengruppen enthält und ausgewählt ist aus Alkylendiolen, Alkylendiolestern und -polyestern, Alkylendiolethern und -polyethern, und

(B) copolymerisierbarem alpha, betaethylenisch ungesättigtem Monomeren;

(C) einem Initiator zur Additionspolymerisation; und

(D) Füllstoffen.

2. Masse nach Anspruch 1, worin sich das Molverhältnis von organischem Diol zu Hydroxyalkylacrylat oder -methacrylat auf 0,15 bis 0,5 beläuft und die Menge des organischen Diisocyanats ausreicht, um ein NCO/OH-Verhältnis von 0,9 bis 1,0 in der Zusammensetzung zu entwickeln.

3. Masse nach Anspruch 1 oder 2, worin das organische Diisocyanat Toluoldiisocyanat ist.

4. Masse nach Anspruch 1, 2 oder 3, worin das organische Diol ein funktionaler Dihydroxy-Polyester der Adipinsäure und des Diethylenglykols ist.

5. Masse nach Anspruch 1, 2 oder 3, worin das organische Diol Polypropylenglykol ist.

6. Masse nach einem der Ansprüche 1 bis 5, worin 0.075 bis 5,0 Gewichtsteile des Polyurethanpolyacrylats je 1 Gewichtsteil des ethylenisch ungesättigten copolymerisierbaren Monomeren enthalten sind.

7. Verfahren zur Herstellung eines beschichteten faserverstärkten hitzegehärteten Kunststoff-Formgegenstandes, dadurch gekennzeichnet, daß

ein faserverstärktes hitzehärtendes Kunststofferzeugnis in einem Metallformwerkzeug hergestellt wird;
das Formwerkzeug geöffnet wird, nachdem das Erzeugnis die vorgesehene Gestalt angenommen hat;
in das offene Formwerkzeug eine Masse nach einem der Ansprüche 1 bis 6 eingeführt wird;
das Formwerkzeug geschlossen und hierdurch die Masse über mindestens einer Oberfläche des Erzeugnisses verteilt wird;
das Formwerkzeug im geschlossenen Zustand bei einer Formpresstemperatur gehalten wird, bis das Erzeugnis weiter gehärtet und die Masse gehärtet ist;
das Formwerkzeug geöffnet und ein geformter, faserverstärkter hitzegehärteter Kunststoffgegenstand mit anhaftendem Überzug auf mindestens einer Oberfläche desselben entnommen wird.

8. Verfahren nach Anspruch 7, dadurch gekennzeichnet, daß das faserverstärkte hitzehärtende Kunststoffmaterial aus einer Masse hergestellt ist, die

(A) ein ungesättigtes Polyesterharz,

(B) ein copolymerisierbares Monomeres für das ungesättigte Polyesterharz,

(C) Füllstoffe, und

(D) einen Katalystor zur Kondensationspolymerisation des ungesättigten Polyesterharzes mit dem copolymerisierbaren Monomeren;

(E) ein Formtrennmittel; und

(F) Glasfaserverstärkungsmaterial enthält.

**Revendications**

1. Une composition de revêtement dans le moule constituée par

A. un polyacrylate ou polyméthacrylate de polyuréthane qui est le produit de la réaction, ne présentant substantiellement pas de radicaux —NCO n'ayant pas réagi, entre:

(1) un diisocyanate organique;
(2) un acrylate ou méthacrylate d'hydroxy-alcoyle;
(3) un diol organique ne contenant pas de groupes arylidènes choisi parmi les diols d'alcoylène, les esters et polyesters de diols d'alcoylène, les éthers et polyéthers de diols d'alcoylène;

B. un monomère copolymérisable non saturé $\alpha$ ou $\beta$ éthyléniquement;

C. une substance d'amorçage de la polymérisation par addition;

D. des charges.

2. Une composition comme revendiquée dans la revendication 1 dans laquelle le rapport molaire dudit diol organique audit acrylate ou méthacrylate d'hydroxy-alcoyle est de 0,15 à 0,5 et la quantité dudit isocyanate organique est suffisante pour produire dans la composition un rapport NCO/OH de 0,9 à 1,0.

3. Une composition comme revendiquée dans les revendications 1 et 2 dans laquelle ledit diisocyanate organique est du diisocyanate de toluène.

4. Une composition comme revendiquée dans les revendications 1, 2 ou 3 dans laquelle ledit diol organique est un polyester dihydroxy-functionnel de l'acide adipique et du diéthylèneglycol.

5. Une composition comme revendiquée

dans les revendications 1, 2 ou 3 dans laquelle ledit diol organique est du polypropylène-glycol.

6. Une composition comme revendiquée dans l'une quelconque des revendications 1 à 5 dans laquelle 0,075 à 5,0 parties en poids dudit polyacrylate de polyuréthane sont prévues pour chaque partie en poids dudit monomère copolymérisable non saturé éthylèniquement.

7. Une méthode pour produire un article en plastique thermodurcissable revêtu, moulé et renforcé par des fibres consistant à:

produire un article en plastique thermodurcissable renforcé par des fibres dans un moule en métal de forme correspondante;
ouvrir ledit moule après que l'article ait pris la forme désirée;
introduire dans le moule ouvert une composition telle qui revendiquée dans l'une quelconque des revendications 1 à 6;
fermer le moule et étaler ainsi ladite composition sur au moins une surface dudit article;
maintenir le moule à l'état fermé à la température de moulage jusqu'à ce que ledit article ait fait complètement prise et que ladite composition ait fait prise;
ouvrir le moule et extraire l'article en plastique thermodurcissable renforcé par des fibres comportant un revêtement adhérant sur au moins une de ses surfaces.

8. Une méthose comme revendiquée dans la revendication 7 dans laquelle ledit matériau plastique thermodurcissable renforcé par des fibres est réalisé à partir d'une composition comprenant:

A. un résine polyester non saturée;
B. un monomère copolymérisable avec la résine polyester non saturée;
C. des charges;
D. un catalyseur pour la polymérisation par condensation de la résine polyester non saturée avec le monomère copolymérisable;
E. un agent de démoulage et
F. un matériau d'armature en fibres de verre.